# EUROPÄISCHE PATENTSCHRIFT

(11) **EP 3 580 112 B1**
(45) Veröffentlichungstag und Bekanntmachung des Hinweises auf die Patenterteilung: **05.04.2023**
(21) Anmeldenummer: 18704893.9
(22) Anmeldetag: 29.01.2018
(51) Int. Cl.: B61G 7/08, F16L 37/096

(54) **SCHIENENFAHRZEUGKUPPLUNGSVORRICHTUNG MIT EINER KUPPLUNGSSTANGE MIT ÜBER EINE KNICKGELENK-VERBINDUNGSEINRICHTUNG VERBINDBAREN KUPPLUNGSSTANGENTEILEN**
COUPLING DEVICE FOR A RAILWAY VEHICLE WITH A COUPLING BAR WITH COUPLING BAR PARTS WHICH CAN BE CONNECTED VIA AN ARTICULATED JOINT CONNECTION DEVICE
DISPOSITIF D'ACCOUPLEMENT POUR VÉHICULE FERROVAIRE COMPRENANT UNE BARRE D'ACCOUPLEMENT COMPRENANT DES PIÈCES DE BARRE D'ACCOUPLEMENT ASSEMBLABLES PAR L'INTERMÉDIAIRE D'UN DISPOSITIF D'ASSEMBLAGE À JOINT ARTICULÉ

(30) Priorität: 08.02.2017 DE 102017102448
(43) Veröffentlichungstag der Anmeldung: 18.12.2019
(73) Patentinhaber: Voith Patent GmbH, 89522 Heidenheim (DE)
(72) Erfinder: JÜRSS, Dominik, 31180 Giesen (DE)
(74) Vertreter: Voith Patent GmbH - Patentabteilung
(86) Internationale Anmeldenummer: PCT/EP2018/052039
(87) Internationale Veröffentlichungsnummer: WO 2018/145929

(56) Entgegenhaltungen:
- EP-A1- 1 619 101
- EP-A1- 1 985 518
- DE-A1- 2 515 677
- DE-A1-102014 218 484
- GB-A- 2 538 253
- US-A1- 2008 258 431
- US-A1- 2010 090 441

## Beschreibung

Die Erfindung betrifft eine Schienenfahrzeugkupplungsvorrichtung, insbesondere mit einer Kupplungsstange mit zwei über eine Knickgelenk-Verbindungseinrichtung miteinander gekoppelten Bauteilen.

Knickgelenke sind für Mittelpufferkupplungen oder Abschleppkupplungen in Schienenfahrzeugen in unterschiedlichsten Ausführungen zur Realisierung von Knickkupplungsvorrichtungen vorbekannt. Diese dienen dazu, den mit einem Kupplungsstangenteil verbundenen Kupplungskopf oder ein Anschlusselement bei Nichtgebrauch aus einer Arbeits- bzw. Betriebsstellung heraus und in das Fahrzeugprofil einzuschwenken. Die Arbeits- bzw. Betriebsstellung ist durch die Ausrichtung der Verbindung zwischen Anschlusselement, insbesondere Kupplungskopf und Anlenkung entlang einer Längsachse und der Möglichkeit der Kraftübertragung charakterisiert und beschreibt beim Einsatz in Kupplungsvorrichtungen den Zustand "Gekoppelt". Dabei gelangt zum Ein- und Ausschwenken des mit dem Kupplungskopf oder einem Anschlusselement gekoppelten Bauteiles, insbesondere Kupplungsstangenteils in der Regel ein Verschwenkmechanismus zum Einsatz. Zur Umsetzung dessen werden Knickgelenkausführungen mit zentraler und in der Kupplungslängsachse liegender Schwenkachse sowie Systeme mit seitlich dieser nebengeordneter Schwenkachse unterschieden. Die beiden Bauteile sind im eingeschwenkten Zustand miteinander zum Kräfte übertragen verbunden. Im ausgeschwenkten Zustand ist das ausgeschwenkte Bauteil vorzugsweise in seiner Position gegenüber dem anderen Bauteil, mit welchem es gelenkig verbunden ist, arretiert. Diese Stellung entspricht einer Funktionsstellung der Funktionsweise "Entkoppelt". Das Ausschwenken kann manuell oder gesteuert erfolgen. Dazu sind vorzugsweise entsprechende Betätigungs- und Stelleinrichtungen vorgesehen.

Beispiele für eine Ausführung mit zentraler Schwenkachse sind aus den Druckschriften EP 1 985 518 B1, EP 0 640 519 A1, US 4, 049,129 sowie EP 0 808 759 A1 vorbekannt. Die über diese realisierbare Schnittstelle mit Gelenkverbindung zwischen den einzelnen Kupplungsstangenteilen ist durch eine aufwendige und speziell auf diesen Fall abgestimmte Ausgestaltung der Bauteile im Verbindungsbereich miteinander charakterisiert. Bei Ausgestaltung der zu verbindenden Bauteile als Gussbauteile sind diese durch eine aufwendige und gesonderte Gussgeometrie, die speziell auf den Anwendungsfall angepasst ist sowie hohe Fertigungskosten charakterisiert, was auch im Reparaturfall einen erhöhten Aufwand bedingt. Durch die Integration der gelenkigen Verbindung in die Längsachse sind ferner der Auslenkwinkel und damit der erzielbare Maximalschwenkwinkel häufig begrenzt. Die Erstreckung der Gelenkverbindung ist im erforderlichen Bauraum in Längsrichtung eines Gesamtsystems mit zu berücksichtigen.

Eine Ausführung mit Versatz der Schwenkachse zur Längsachse ist beispielsweise aus EP 1 619 101 B1 vorbekannt. Bei dieser sind die Kopplungselemente integral mit den Kupplungsstangenteilen ausgebildet, was ebenfalls in einer speziellen Ausbildung dieser im Bereich der Gelenkverbindung resultiert.

US2010/0090441 A1, US2008/258431 A1, GB 2538253 A und DE25 15 677 A1 offenbaren allgemein Ausführungen mit Knickverbindungen.

Nachteilig bei allen vorgenannten Ausführungen aus dem Stand der Technik ist die Ausbildung der verbindungsrelevanten Teile direkt an den in einer ersten Funktionsstellung Kraft übertragend miteinander zu verbindenden Bauteilen, insbesondere Kupplungsstangenteilen. Da diese neben der Gelenkverbindung zum Verschwenken auch die Einrichtungen zum Kraft übertragenden Verbinden der beiden Bauteile mit enthalten oder tragen müssen, sind die einzelnen miteinander verbindbaren oder gegeneinander verschwenkbaren Bauteile sehr komplex, speziell auf den Anwendungsfall abgestimmt und aufwendig ausgebildet.

Dies schlägt sich neben einer aufwendigen Herstellung in einem geringen Standardisierungsgrad nieder. Dies ist insbesondere auch im Reparaturfall problematisch, da hier nicht oder nur sehr selten auf Standardbauteile zurückgegriffen werden kann.

Der Erfindung liegt daher die Aufgabe zu Grunde, ein Knickgelenk für den Einsatz in Kupplungsvorrichtungen für Schienenfahrzeuge derart weiterzubilden, dass die genannten Nachteile vermieden werden. Die konstruktive Ausführung und Integration in eine Kupplungsstange soll möglichst einfach und mit geringen erforderlichen Modifikationen an den miteinander zu koppelnden Kupplungsstangenteilen realisiert werden können. Das Knickgelenk selbst soll nach Möglichkeit keine speziell auf einen bestimmten Anwendungs- und Einsatzfall zu modifizierende Anbindungspunkte und Schnittstellen benötigen. Der Aufbau soll einfach, bauraumsparend und nach Möglichkeit modular erfolgen. ferner soll es möglich sein, eine derartige Knickgelenk-Verbindungseinrichtung auch auf einfache Art und Weise für andere Systeme vorzusehen.

Die erfindungsgemäße Lösung ist durch die Merkmale von Anspruch 1 charakterisiert. Vorteilhafte Ausgestaltungen sind in den Unteransprüchen wiedergegeben.

Es wird eine Knickgelenk-Verbindungseinrichtung zum Kraft übertragenden Verbinden zweier sich in einer ersten Funktionsstellung jeweils entlang einer gemeinsamen Längsachse erstreckender Bauteile und zum Verschwenken eines der beiden Bauteile gegenüber dem anderen Bauteil um eine senkrecht und vorzugsweise beabstandet bzw. parallel zur Längsachse angeordnete Schwenkachse in wenigstens eine weitere zweite Funktionsstellung vorgeschlagen. Diese umfasst zwei Kopplungselemente, wobei jedes der Kopplungselemente einen Anschlussbereich mit einer Anschlusseinrichtung zum lösbaren Verbinden mit einem Endbereich eines der Bauteile aufweist, die beiden Kopplungselemente über wenigstens eine die Schwenkachse beschreibende Gelenkverbindung miteinander verbunden sind und den beiden Kopplungselementen wenigstens eine lösbare Einrichtung zum Kraft übertragenden Verbinden der Kopplungselemente zugeordnet ist.

Die Lösung stellt damit eine Knickgelenk-Verbindungseinrichtung bereit, welche auf die integrale Ausbildung von Kopplungselementen an den einzelnen miteinander zu verbindenden beim Einsatz in Kupplungsvorrichtungen in Schienenfahrzeugen verzichtet, und statt dessen auf eine Ausbildung der Kopplungselemente als separate Bauteile, deren Verbindung über eine Gelenkverbindung und die Möglichkeit zur Bereitstellung einer Verbindung zum Zweck der Kraftübertragung setzt. Die erfindungsgemäße Knickgelenk-Verbindung wird dabei auch den unterschiedlichen Anforderungen an diese durch die Möglichkeit der Realisierung unterschiedlicher Funktionsstellungen "Gekoppelt" und "Entkoppelt" gerecht. Dazu gehören zum einen die Übertragung von Kräften zwischen den Bauteilen in der Funktionsstellung "Gekoppelt" und die platzsparende Positionierung durch Abschwenken eines der Bauteile gegenüber dem anderen bei "Entkoppelung".

Die Kopplungselemente selbst können relativ einfach gestaltet werden und in Abhängigkeit der gewählten Ausbildung der Anschlusseinrichtung an diesen in die unterschiedlichsten Systeme mit gleicher Anschlussgeometrie und analogem Anforderungsprofil integriert werden. Die Knickgelenk-Verbindungseinrichtung kann ferner vorkonfektioniert und die einzelnen Bestandteile dieser auf Lager gehalten werden. Auf eine komplexe Ausbildung der miteinander zu verbindenden Bauteile und Berücksichtigung bei Konstruktion dieser kann verzichtet werden. Vielmehr besteht hier die Möglichkeit, standardisierte Anschluss- und Verbindungseinrichtungen an den Kopplungselementen vorzusehen, die auf einfache Art und Weise mit Bauteilen mit komplementär ausgebildeten Standardanschlusseinrichtungen in Verbindung gebracht werden. Des Weiteren bietet die erfindungsgemäße Ausbildung der Knickgelenk-Verbindungseinrichtung auch erhebliche Vorteile im Hinblick auf Service und Reparatur. So ist bei Schädigungen an dieser oder einem der Anschlussbauteile, insbesondere Kupplungsstangenteile ein einfacher Austausch nur der betroffenen Funktionskomponenten möglich.

Der die Anschlusseinrichtung tragende Anschlussbereich eines einzelnen Kopplungselementes zum lösbaren Verbinden mit dem Endbereich eines der Bauteile weist vorzugsweise Mittel zum Erzeugen zumindest eines Formschlusses oder Kraftschlusses oder einer Kombination aus diesen im Zusammenwirken mit im Endbereich des Bauteils angeordneten Anschlusseinrichtungen auf. Gemäß einer besonders vorteilhaften Weiterbildung ist der die Anschlusseinrichtung tragende Anschlussbereich eines einzelnen Kopplungselementes zum lösbaren Verbinden mit dem Endbereich eines der Bauteile als Schalenmuffe zum Verbinden mit einem im Endbereich des Bauteils angeordneten Schalenmuffenbund ausgebildet. Diese Lösung bietet den Vorteil, auf standardisierte Anschlussgeometrien für Schalenmuffenverbindungen an den miteinander zu verbindenden Komponenten, insbesondere Kopplungselement und vor Allem dem mit diesem zu verbindenden Bauteil bei gleichzeitig sehr kompakter Bauweise, insbesondere in Einbaulage in Längsrichtung zurückgreifen zu können. Des Weiteren besteht dadurch die Möglichkeit, standardisierte Anschlussgeometrien für unterschiedliche Einbausituationen bereitzustellen. Montage und Austausch sind zudem sehr einfach realisierbar.

Bezüglich der konkreten Ausgestaltung der Schalenmuffenverbindung besteht hinsichtlich der gewählten Geometrie und Dimensionierung der einzelnen Funktionsflächen eine Mehrzahl von Möglichkeiten. Dies ist insbesondere auch vom Einsatzgebiet und der Einbausituation abhängig. In einer vorteilhaften Ausbildung dieser Ausführung, wie diese insbesondere zur Verbindung von Kupplungsstangenteilen zum Einsatz gelangen kann, weist die Anschlusseinrichtung eines einzelnen Kopplungselementes am Innenumfang Mittel zur wenigstens mittelbaren Abstützung in Längsrichtung des Bauteiles betrachtet an einem ersten Flächenbereich des Schalenmuffenbundes und einen Innengewinde tragenden Bereich zum Zusammenwirken mit einem Schraubring zum wenigstens mittelbarem Verspannen des Koppelelementes mit dem im Endbereich des Bauteils angeordneten Schalenmuffenbund, insbesondere einem zweiten entgegengesetzt zum ersten Flächenbereich ausgerichteten Flächenbereich am Schalenmuffenbund auf. Wenigstens mittelbar bedeutet in diesem Zusammenhang, dass die Anlage bzw. Verspannung entweder direkt zwischen den beiden genannten Komponenten erfolgt oder aber unter Zwischenordnung weiterer Komponenten. Dies kann beispielsweise durch Vorsehen eines vorzugsweise zur vereinfachten Montage zweiteilig in Umfangsrichtung unterteilten Stützringes zwischen Schalenmuffenbund und Schraubring erfolgen.

Bezüglich der Ausführung der Einrichtung zum lösbaren Verbinden der Kopplungselemente miteinander in der ersten Funktionsstellung ("Gekoppelt") besteht eine Mehrzahl von Möglichkeiten. Vorzugsweise ist diese als Verbindungseinrichtung, ausgewählt aus der nachfolgenden Gruppe von Verbindungseinrichtungen ausgebildet:
- formschlüssige Verbindungseinrichtung
- kraftschlüssige Verbindungseinrichtung,
insbesondere Klemmverbindungseinrichtung oder Verspanneinrichtung oder Schraubverbindungseinrichtung.

Gemäß der Erfindung ist die Einrichtung zum lösbaren Verbinden der Kopplungselemente miteinander in der ersten Funktionsstellung ("Gekoppelt") als Verriegelungseinrichtung mit einem Verriegelungselement und einer dem Verriegelungselement zugeordneten Stelleinrichtung zur Betätigung des Verriegelungselementes ausgebildet. Diese kann auf Form- oder Kraftschluss basierend ausgebildet sein. Je nach Ausgestaltung der Verriegelungseinrichtung, insbesondere der Stelleinrichtung kann die Verriegelung oder Entriegelung jeweils automatisiert oder manuell oder aber aktiv angesteuert, beispielsweise über entsprechende Stelleinrichtungen erfolgen.

Gemäß einer ersten Ausbildung ist die Stelleinrichtung derart ausgeführt und angeordnet, dass diese eine Betätigungseinrichtung aufweist, die sowohl zum Verals auch Entriegeln betätigt wird. Die Betätigungseinrichtung ist in diesem Fall wenigstens mittelbar mit dem Verriegelungselement, vorzugsweise direkt gekoppelt. Die Betätigung kann manuell oder aber über eine, die Betätigungseinrichtung beaufschlagende und ansteuerbare Stelleinrichtung erfolgen.

Gemäß einer zweiten besonders vorteilhaften Ausbildung ist die Stelleinrichtung derart ausgeführt und angeordnet, dass diese eine Betätigungseinrichtung aufweist, die entweder nur zum Verriegeln oder Entriegeln aktiv betätigt werden muss. In diesem Fall ist das Verriegelungselement vorgespannt an einem der Kopplungselemente gegenüber diesem verschwenkbar oder verschiebbar gelagert. Die Stelleinrichtung weist ein Betätigungselement auf, welches ausgebildet und angeordnet ist, nur beim Verriegeln oder Entriegeln aktiv betätigt oder zu diesem Zweck angesteuert zu werden. Besonders bevorzugt ist das Betätigungselement ausgebildet und angeordnet, nur beim Entriegeln aktiv betätigt werden zu müssen. Mit dieser Lösung wird gewährleistet, dass das Verriegelungselement ohne zusätzlich aufzubringende Kraft von außen immer die Verriegelungsposition anstreben wird und damit diesem als Primärfunktion die Aufrechterhaltung der Kraft übertragende Verbindung zukommt.

Eine besonders einfach zu realisierende Umsetzung dieser Funktion erfolgt durch Ausbildung des Verriegelungselementes als gekrümmtes Hebelelement, welches mit einem ersten Endbereich um eine senkrecht und parallel zur Längsachse angeordnete Schwenkachse an einem der Kopplungselemente schwenkbar gelagert ist und am anderen freien Endbereich zumindest einen Verriegelungsflächenbereich zum Zusammenwirken mit einem Flächenbereich am jeweils anderen der Kopplungselemente unter Ausbildung eines Kraft- und/oder Formschlusses aufweist. Um das ausgeschwenkte Bauteil auf einfache Art und Weise mit dem anderen Bauteil verbinden zu können, lenkt dieses beim Einschwenken das Verriegelungselement aus der durch die Vorspannung gehaltenen Position aus und übernimmt damit beim Einschwenken die Funktion eines Betätigungselementes. Das Verriegelungselement weist dazu vorzugsweise am freien Endbereich eine Eingleit- oder Beaufschlagungsfläche zum Zusammenwirken mit dem anderen der Koppelelemente auf, um beim Verschwenken des anderen Koppelelementes aus der zweiten in die erste Funktionsstellung von diesem ausgelenkt zu werden und aufgrund der Rückstellkräfte einer zur vorgespannten Lagerung vorgesehenen Vorspanneinrichtung selbsttätig in die Verriegelungsstellung verbracht wird.

Die Knickgelenk-Verbindungseinrichtung ist durch Anschlusseinrichtungen an den Koppelelementen zum Verbinden mit den einzelnen, miteinander in der ersten Funktionsstellung Kraft übertragend zu verbindenden Bauteilen, die schwenkbare Verbindung zwischen den Kopplungselementen sowie die Einrichtung zum Kraft übertragenden Verbinden Verbinden charakterisiert. Diese Einrichtungen sind an den Kopplungselementen angeordnet bzw. gelagert, wobei die Zuordnung dieser Einrichtungen in einer ersten Variante zu unterschiedlichen Kopplungselementen und in einer zweiten bevorzugten Variante primär zu einem der Kopplungselemente erfolgt.

So sind gemäß dieser zweiten Variante die lösbare Einrichtung zum Kraft übertragenden Verbinden der Kopplungselemente und die Gelenkverbindung an einem der beiden Kopplungselemente und bezogen auf die Längsachse der Knickgelenk-Verbindungseinrichtung beidseitig an diesem angeordnet oder an diesem vorgesehen.

Das einzelne Kopplungselement selbst ist vorzugsweise als ringförmiges Bauteil ausgebildet, mit beidseitig der Längsachse am Außenumfang angeordneten Flanschbereichen zur Anordnung der Gelenkverbindung und der Einrichtung zum Kraft übertragenden Verbinden. Dies bietet den Vorteil einer Funktionskonzentration an einem der Kopplungselemente und eine nach Möglichkeit einfache Gestaltung des anderen Kopplungselementes.

Bezüglich der Anordnung der einzelnen Funktionseinrichtungen in Längsrichtung der Knickgelenk-Verbindungseinrichtung sind unterschiedliche Möglichkeiten denkbar, wobei vorzugsweise Varianten mit geringem Versatz zueinander gewählt werden, um die Kopplungselemente und die gesamte Knickgelenk-Verbindung als kompakte Einheit mit möglichst wenig Bauraumbedarf bereitzustellen. Dazu ist vorzugsweise die lösbare Einrichtung zum Kraft übertragenden Verbinden der Kopplungselemente in Längsrichtung der Knickgelenk-Verbindungseinrichtung betrachtet im Bereich der Erstreckung der an einem einzelnen Kopplungselement angeordneten Anschlusseinrichtung zum lösbaren Verbinden mit einem Endbereich eines der Bauteile oder innerhalb des Bereiches der Erstreckung beider Kopplungselemente in Längsrichtung angeordnet.

In einer besonders vorteilhaften Weiterbildung dieser Ausführung ist die Gelenkverbindung und die lösbare Einrichtung zum Kraft übertragenden Verbinden der Kopplungselemente in Längsrichtung der Knickgelenk-Verbindungseinrichtung betrachtet frei von Versatz zueinander angeordnet.

Die Anordnung erfolgt damit an einem Kopplungselement.

In einer weiteren vorteilhaften Weiterbildung ist zusätzlich die Gelenkverbindung in Längsrichtung der Knickgelenk-Verbindungseinrichtung betrachtet im Bereich der Erstreckung der an einem einzelnen Kopplungselement angeordneten Anschlusseinrichtung zum lösbaren Verbinden mit einem Endbereich eines der Bauteile oder innerhalb des Bereiches der Erstreckung beider Kopplungselemente in Längsrichtung angeordnet.

Die erfindungsgemäße Lösung ist nachfolgend anhand von Figuren erläutert. Darin ist im Einzelnen Folgendes dargestellt:
- Figuren 1a: zeigt in einer Perspektivansicht anhand eines Ausschnittes aus der Kupplungsvorrichtung eine erfindungsgemäß ausgeführte Knickgelenk-Verbindungseinrichtung;
- Figuren 1b: zeigt eine Ausführung gemäß Figur 1a in einer Ansicht von oben;
- Figur 2a: verdeutlicht anhand eines Ausschnittes aus der Kupplungsvorrichtung in Perspektivansicht die erfindungsgemäße Knickgelenk-Verbindungseinrichtung in der Stellung "Entkoppelt";
- Figur 2b: verdeutlicht eine Knickgelenk-Verbindungseinrichtung gemäß Figur 2a in einer Ansicht von oben mit zusätzlicher Darstellung einer Vorspanneinrichtung;
- Figur 3: zeigt anhand einer Ansicht gemäß Figur 1b in schematisiert vereinfachter Darstellung die Funktionsweise einer Stelleinrichtung;
- Figur 4: zeigt anhand einer Schnittdarstellung die Verbindungseinrichtung zwischen dem ersten Kopplungselement der Knickgelenk-Verbindungseinrichtung und einem Kupplungsstangenteil;
- Figur 5a und 5b: verdeutlichen in schematisiert vereinfachter Darstellung den Einsatz einer Knickgelenk-Verbindungseinrichtung in einer Kupplungsstange einer Kupplungsvorrichtung in zwei Funktionsstellungen der Knickgelenk-Verbindungseinrichtung.

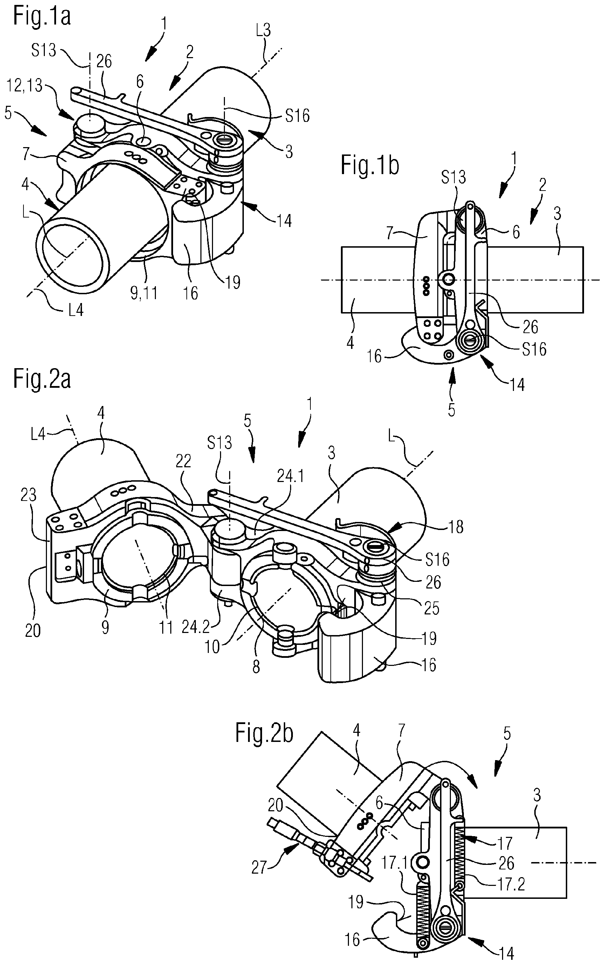

Figuren 1a und 1b verdeutlichen den Grundaufbau und die Grundfunktion einer erfindungsgemäß ausgebildeten Knickgelenk-Verbindungseinrichtung 5 am Beispiel der Verbindung zweier Bauteile in Form von Kupplungsstangenteilen 3, 4 in der Funktionsstellung "Gekoppelt".

Die Figur 1a zeigt dabei in einer Perspektivansicht einen Ausschnitt aus einer Kupplungsvorrichtung 1, umfassend eine zumindest zweiteilige Kupplungsstange 2, welche - hier nicht dargestellt - einen ersten Endbereich zum Anlenken, Koppeln mit einem Fahrzeug und einen zweiten Endbereich zum wenigstens mittelbaren Koppeln mit einem Kupplungskopf oder einem anderen Anschlusselement zur Kopplung mit einem weiteren zweiten Fahrzeug, vorzugsweise einem schienengebundenen Fahrzeug aufweist. Die Figur 1b zeigt die Ausführung gemäß Figur 1a in einer Ansicht von oben. Zur Verdeutlichung der einzelnen Richtungen ist beispielhaft ein Koordinatensystem angelegt. Die Kupplungsstange 2 ist in der Betriebsposition durch eine Erstreckung in Längsrichtung entlang einer Längsachse L charakterisiert. Diese entspricht beim Einsatz in Kupplungsvorrichtungen 1 in Schienenfahrzeugen der Verlängerung der Längsachse L3 des mit dem Schienenfahrzeug wenigstens mittelbar verbundenen Kupplungsstangenteils 3. Die Längsachse L wird ferner in der Funktionsstellung "Gekoppelt" durch die Kupplungslängsachse bestimmt, entspricht im dargestellten Koordinatensystem der X-Achse und fällt beim Einsatz in Fahrzeugen mit der Fahrzeuglängsrichtung zusammen. Die Y-Achse entspricht der Breitenrichtung, d.h. der Richtung senkrecht zur X-Achse in einer horizontalen Ebene. Die Z-Achse beschreibt die Höhenrichtung.

Die Kupplungsstange 2 ist zweiteilig ausgebildet, umfassend einen ersten Kupplungsstangenteil 3 und einen zweiten Kupplungsstangenteil 4. Der erste Kupplungsstangenteil 3 und der zweite Kupplungsstangenteil 4 sind über eine Knickgelenk-Verbindungseinrichtung 5 miteinander gekoppelt, wobei die Knickgelenk-Verbindungseinrichtung 5 zumindest zwei Funktionsweisen mit entsprechenden Funktionsstellungen ermöglicht, eine erste Funktionsweise mit einer Funktionsstellung "Gekoppelt" und eine zweite Funktionsweise "Entkoppelt". In der die erste gekoppelte Funktionsweise beschreibenden Funktionsstellung sind die beiden Kupplungsstangenteile 3 und 4 in fluchtender Lage zueinander angeordnet und miteinander zum Übertragen von Kräften verbunden.

In der zweiten Funktionsweise "Entkoppelt", welche für die Ausführung gemäß Figur 1 in den Figuren 2a und 2b in unterschiedlichen Ansichten wiedergegeben ist, ist der mit dem Anschlusselement zur Verbindung mit einem weiteren Fahrzeug koppelbare Kupplungsstangenteil, hier beispielhaft 4 gegenüber dem anderen Kupplungsstangenteil 3 um einen Winkel abschwenkbar. Es versteht sich dabei, dass die Funktionen der Kupplungsstangenteile 3 und 4 auch vertauschbar sind und die dargestellte Zuordnung der einzelnen Komponenten der Knickgelenk-Verbindungseinrichtung 5 zu den Kupplungsstangenteilen von Figur 1 auch getauscht werden können.

In Figur 1 dargestellt ist die Knickgelenk-Verbindungseinrichtung in der Funktionsstellung "Gekoppelt", das heißt die beiden Kupplungsstangenteile 3 und 4 sind koaxial zueinander und in Kraft übertragender Weise miteinander gekoppelt angeordnet. Die Längsachsen L3 und L4 der Kupplungsstangenteile 3, 4 fallen mit der Längsachse L der Kupplungsstange 2 zusammen. Einer der beiden Kupplungsstangenteile 3 oder 4 ist dabei an seinem vom anderen Kupplungsstangenteil jeweils weggerichteten Endbereich wenigstens mittelbar mit einem ersten Fahrzeug verbindbar. Dies ist hier im Einzelnen nicht dargestellt. Der andere Kupplungsstangenteil dient der Kopplung mit einem Anschlusselement zur Kopplung mit einem weiteren Fahrzeug. Auch diese Verbindung erfolgt wenigstens mittelbar, das heißt gegebenenfalls unter Zwischenschaltung weiterer Kraft übertragender Elemente. Im dargestellten Fall wird beispielhaft der mit dem Fahrzeug wenigstens mittelbar verbindbare Kupplungsstangenteil vom ersten Kupplungsstangenteil 3 gebildet. Der mit einem Anschlusselement zum Koppeln mit einem Anschlusselement eines weiteren Fahrzeuges wenigstens mittelbar verbundene Kupplungsstangenteil wird vom Kupplungsstangenteil 4 gebildet.

Beide Kupplungsstangenteile 3, 4 sind vorzugsweise mit zylindrischem oder hohlzylindrischem Querschnitt ausgebildet und an den zueinander weisenden Endbereichen über eine Knickgelenk-Verbindungseinrichtung 5 miteinander gekoppelt. Die Knickgelenk-Verbindungseinrichtung 5 fungiert in der Kraft übertragenden Betriebsweise in der Stellung "Gekoppelt" zur Verbindung und Kraftübertragung. Die Knickgelenk-Verbindungseinrichtung 5 umfasst dazu zwei mit den jeweiligen Kupplungsstangenteilen 3, 4 jeweils verbindbare Kopplungselemente, ein erstes mit dem ersten Kupplungsstangenteil 3 und ein zweites mit dem zweiten Kupplungsstangenteil 4 verbindbares ringförmiges Kopplungselement 6, 7. Die Verbindung mit dem jeweiligen Kupplungsstangenteil 3, 4 erfolgt über am ringförmigen Kopplungselement 6, 7 vorgesehene Anschlusseinrichtungen 8, 9, welche mit dazu komplementär ausgebildeten Anschlusseinrichtungen 10, 11 an den jeweiligen Kupplungsstangenteilen - erster Kupplungsstangenteil 3 und zweiter Kupplungsstangenteil 3 - in Wirkverbindung bringbar sind. Jedes der beiden ringförmigen Kopplungselemente 6, 7 ist dabei derart ausgebildet, dass dieses vorzugsweise den jeweiligen Kupplungsstangenteil 3, 4 an den jeweils in der Betriebsstellung zueinander weisenden Endbereichen in Umfangsrichtung vollständig umschließend ausgebildet ist.

Die ringförmigen Kopplungselemente 6 und 7 sind gelenkig miteinander derart verbunden, dass ein Verschwenken um eine senkrecht zur Längsachse L und parallel zu dieser verlaufende Schwenkachse S13 über einen vordefinierten Winkelbereich gegeneinander möglich ist. In Einbaulage bezogen auf die Längsachse L ist dazu eine Gelenkverbindung 13 vorgesehen, welche im einfachsten Fall über einen Drehbolzen realisiert wird, dessen Drehachse die Schwenkachse S13 beschreibt. Bevorzugt ist die Schwenkachse S13 innerhalb der Erstreckung der beiden Kopplungselemente 6, 7 in der gekoppelten Stellung in Längsrichtung angeordnet. Besonders bevorzugt ist die Schwenkachse S13 in eine vom ringförmigen Kopplungselement 6 beschreibbare Ebene gelegt und verläuft bei Verbindung dessen mit dem Kupplungsstangenteil 3 vorzugsweise seitlich zum Außenumfang des jeweiligen Kupplungsstangenteils 3. Diese Gelenkverbindung 13 ermöglicht je nach Ausbildung und Dimensionierung der einzelnen Teile ein Verschwenken über Totpunktlage zwischen den beiden Kupplungsstangenteilen 3 und 4.

Zur Realisierung der Kopplung in der Betriebsstellung und damit der Funktionsstellung "Gekoppelt" ist des Weiteren eine Einrichtung 12 zum Kraft übertragenden Verbinden der Kopplungselemente 6, 7 in der Funktionsstellung "Gekoppelt" vorgesehen, welche lösbar ist. In besonders vorteilhafter Weise ist diese als Verriegelungseinrichtung 14 ausgeführt, welche die beiden Kopplungselemente 6 und 7 in Betriebsstellung miteinander Kraft übertragend koppelt und gegeneinander verriegelt. Diese Verriegelungseinrichtung 14 kann verschiedenartig ausgebildet sein. Figuren 1a und 1b verdeutlichen eine besonders vorteilhafte Ausgestaltung, bei welcher an einem der beiden Kopplungselemente 6 oder 7, im dargestellten Fall am Kopplungselement 6, ein schwenkbares Verriegelungselement 16 vorgesehen ist, welches ausgebildet und angeordnet ist, um in der Betriebsstellung mit einem Gegenelement 22 am anderen Kopplungselement 7 eine kraft- oder formschlüssige Verbindung einzugehen. Im dargestellten Fall ist das Verriegelungselement 16 ausgebildet, das andere Kopplungselement 7 am Außenumfang zu umgreifen. Dazu ist das Verriegelungselement 16 in einer Ansicht von oben betrachtet leicht gekrümmt ausgeführt und weist an seinem zur Kupplungsstange 2 weisenden Endbereich entsprechend ausgebildete Funktionsflächen auf, die ein Umgreifen ermöglichen.

Im Einzelnen ist hier das Verriegelungselement 16 beispielhaft in Form eines hebelartigen gekrümmten Elementes mit einem Riegelbereich ausgeführt, welches drehbar um eine in Einbaulage betrachtet vertikale Achse, insbesondere senkrecht zur Längsachse L und mit Versatz zu dieser angeordnete Schwenkachse S16 verschwenkbar ist. Das Verriegelungselement 16 in Form eines Verriegelungshebels weist hier als Riegelbereich einen Flächenbereich 19 auf, welcher mit einem Flächenbereich 20 am Kopplungselement 7, insbesondere an seitlich zur Längsachse L vorgesehenen flanschartigen Erweiterungen 23, 22 am Außenumfang des ringförmigen Kopplungselementes 7 eine kraftschlüssige Verbindung bei Betriebsstellung eingeht. Der Flächenbereich 20 ist dabei im dargestellten Fall an der vom Kopplungselement 6 weg gerichteten Seite am Kopplungselement 7 vorgesehen, während der den Riegelbereich beschreibende Flächenbereich 19 in der gekoppelten Stellung zu diesem ausgerichtet ist.

Die Verriegelungseinrichtung 14 kann derart angeordnet und ausgebildet sein, dass ein Verriegeln automatisch bei Anordnung der beiden Kopplungselemente 6 und 7 in der Betriebsstellung erfolgt oder aber separat zum Verriegeln zu betätigen ist. Im zuletzt genannten Fall ist eine entsprechend ausgestaltete, hier jedoch nicht dargestellte Stelleinrichtung zum aktiven Betätigen des Verriegelungselementes 16 sowohl in die verriegelnde Stellung als auch zur Entriegelung und damit Entkoppelung der Knickgelenk-Verbindungseinrichtung 5 vorgesehen. In besonders vorteilhafter Ausbildung werden jedoch Verriegelungseinrichtungen 14 eingesetzt, bei welchem das Verriegelungselement 16 automatisch beim Einschwenken des ausgeschwenkten Kupplungsstangenteils 4 in die fluchtende Lage zum anderen Kupplungsstangenteil 3 verriegelt und lediglich zum Lösen der Verbindung aktiv betätigt werden muss. Beim Einschwenken von der Funktionsstellung "Entkoppelt" in die Betriebsstellung und damit die Funktionsstellung "Gekoppelt" wird dabei das Verriegelungselement 16 in eine Position gebracht, in welcher in Längsrichtung der Kupplungsvorrichtung 1 betrachtet die beiden Kopplungselemente 6 und 7 gegeneinander verriegelt bzw. verspannt werden. Zum Lösen ist eine Stelleinrichtung 18 vorgesehen, welche es ermöglicht, das zweite Kopplungselement aus einer gegenüber dem ersten Kopplungselement gelösten Stellung zu verbringen und die Verriegelung aufzuheben. Die Stelleinrichtung 18 dazu kann vielgestaltig ausgeführt sein. Im einfachsten Fall umfasst die Stelleinrichtung 18 einen Betätigungshebel 26. Dieser ist drehfest mit der Schwenkachse S16 des Verriegelungselementes 16 verbunden und ermöglicht beim Verschwenken in der angegebenen Schwenkrichtung ein entsprechendes Auslenken des Verriegelungselementes 16.

Das automatische Verriegeln beim Einschwenken des Kupplungsstangenteils wird in vorteilhafter Weise wird dies jedoch dadurch realisiert, dass die Position des Verriegelungselementes 16 gegenüber dem Kopplungselement 6 vorgespannt gehalten ist und bei gewünschtem Verriegeln durch Aufbringen einer Kraft beim Einschwenken des ausgeschwenkten Kupplungsstangenteils das Verriegelungselement 16 gegen die Vorspannung ausgelenkt wird und nach Erreichen der erforderlichen Position (fluchtende Lage zum anderen Kupplungsstangenteil) aufgrund seiner Ausgestaltung und der Vorspannung die Verriegelungsstellung einnimmt und beide Kopplungselemente 6, 7 gegeneinander verriegelt. Um ein Verschwenken des Kupplungsstangenteils 4 in eine zweite Funktionsstellung zu gewährleisten, ist eine Stelleinrichtung 18 vorgesehen, welche das Verriegelungselement 16 dann aktiv um die Schwenkachse S16 verschwenkt. In den Figuren 1a, 1b und 2a ist die Vorspanneinrichtung nicht dargestellt. Diese kann in beispielhafter Ausbildung über Federeinrichtungen realisiert werden. Diese Federeinrichtungen können direkt in die Verbindung zwischen dem Verriegelungselement 16 und einem Betätigungshebel 26 der Stelleinrichtung 18 sowie Verriegelungselement 16 und Kopplungselement 6 integriert sein. Ferner ist es denkbar, den Betätigungshebel 26 starr mit dem Verriegelungselement 16 zu koppeln und hier den Betätigungshebel 26 entsprechend über das Kopplungselement 7 vorgespannt zu lagern. In Figur 2b ist beispielhaft die Ausführung einer Vorspanneinrichtung 17 zur Erläuterung in einer Ansicht von oben für die Ausbildung gemäß Figur 1 wiedergegeben. Das Verriegelungselement 16 ist vorzugsweise über eine Speichereinheit, insbesondere in Form von Federelementen 17.1, 17.2, vorgespannt in der verriegelnden Stellung gehalten, wobei ein erstes Federelement 17.1 zwischen Kopplungselement 6 und Verriegelungselement 16 vorgesehen ist und ein zweites zwischen Betätigungshebel 26 und Verriegelungselement vorgesehen ist.

Vorteilhaft bei allen Ausführungen sind Verriegelungseinrichtung 14 und Gelenkverbindung 13 einem der beiden Kopplungselemente 6 oder 7 zugeordnet bzw. an einem der beiden Kopplungselemente 6, 7 gelagert. In den Figuren 1 und 2 dargestellt ist dies das Kopplungselement 6. Denkbar ist es jedoch auch, Verriegelungseinrichtung 14 und Gelenkverbindung 13 auch am anderen Kopplungselement 7 anzuordnen oder aber diese jeweils unterschiedlichen Kopplungselementen 6 und 7 zuzuordnen.

In besonders vorteilhafter Weise sind die Verriegelungseinrichtung 14 und die Gelenkverbindung 13 beidseitig der Längsachse L und vorzugsweise frei von Versatz zueinander in Längsrichtung angeordnet.

Die in den Figuren 1 und 2 dargestellten Ausführung ist besonders bauraumsparend und kompakt. Bei dieser ist das einzelne ringförmige Kopplungselement 6 bzw. 7 derart ausgebildet, dass dieses in Einbaulage betrachtet in Breitenrichtung der Kupplungsvorrichtung 1 jeweils seitlich der Kupplungsstange 2 ausgebildete Flanschbereiche aufweist, welche auf der einen Seite der Kupplungsstange 3 die Realisierung der Gelenkverbindung 13 und Anordnung dient und auf der anderen Seite der Verriegelungseinrichtung 14. Zum besseren Verständnis wird insbesondere auf die Darstellung der Knickgelenk-Verbindungseinrichtung 5 in der ausgelenkten Stellung der Kupplungsstangenteile 3, 4 in den Figuren 2a und 2b verwiesen. Erkennbar sind dabei die am Innenumfang der ringförmigen Kopplungselemente 6 und 7 angeordneten Anschlusseinrichtungen 8 und 9, die mit den entsprechend komplementär dazu angeordneten Anschlusseinrichtungen 10 und 11 an den jeweiligen Kupplungsstangen 3 und 4 in Wirkverbindung bringbar sind. Ferner erkennbar ist die Ausführung als das Kupplungsstangenteil 3 bzw. 4 in Umfangsrichtung umschließendes Element mit seitlichen, Funktionsflächen tragenden flanschartigen Bereichen. Diese sind in Einbaulage betrachtet beidseitig der Längsachse angeordnet und vorzugsweise entweder in Umfangsrichtung um die Kupplungsstange verlaufend ausgerichtet bzw. seitlich. Die beiden Flanschbereiche sind mit 22 und 23 am zweiten ringförmigen Kopplungselement 7 und 24 und 25 am ersten Kopplungselement 6 bezeichnet. Die Flanschbereiche 22 und 24 dienen dabei zur Realisierung der Gelenkverbindung 13. Der Flanschbereich 24 weist dazu zwei Teilflanschbereiche 24.1 und 24.2 auf, die senkrecht zur Längsachse in horizontaler Richtung erstreckend ausgeführt sind und in vertikaler Richtung beabstandet zueinander angeordnet sind. Durch diese erstreckt sich eine Durchgangsöffnung zur Aufnahme eines Gelenkbolzens oder anders ausgebildeten Drehgelenkes. Der Flanschbereich 22 ist mit einem in einem Winkel ausgerichteten Vorsprung ausgeführt, welcher der Realisierung einer Scharnierverbindung mit den beiden Teilflanschbereichen 24.1 und 24.2 dient. Ferner erkennbar ist die Ausgestaltung der Verriegelungseinrichtung 14, insbesondere des Verriegelungselementes 16 in Form eines Verriegelungshebels, welcher derart ausgestaltet ist, den Flanschbereich 23 zu umgreifen. Der Betätigungshebel 26 der Stelleinrichtung 18 ist in Einbaulage oberhalb des ringförmigen Elementes angeordnet. Die beiden Schwenkachsen, die Schwenkachse S13 zur Realisierung der gelenkigen Verbindung 13 sowie S16 zur Realisierung der gelenkigen Verbindung zwischen dem Verriegelungselement 16 und dem ringförmigen Kopplungselement 6 sind vorzugsweise parallel zueinander angeordnet. In besonders vorteilhafter Ausbildung ist das ringförmige Kopplungselement 6 derart ausgeführt, dass die Schwenkachsen S13, S16 symmetrisch bezogen auf die Längsachse L angeordnet sind.

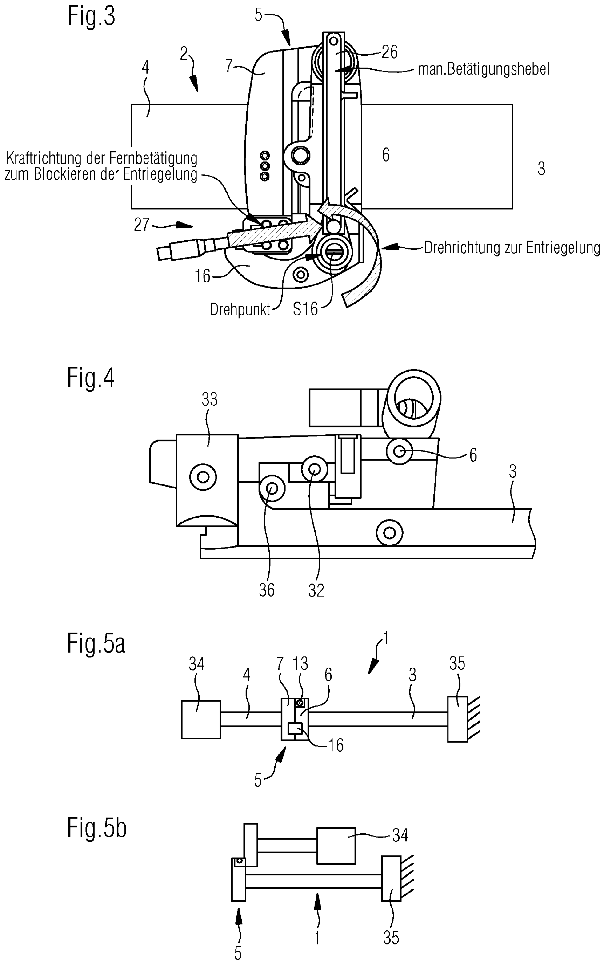

In der Figur 3 ist am Beispiel der Ausführung aus Figur 2b die Möglichkeit zur Fernbetätigung wiedergegeben. Hier ist eine Stelleinrichtung 27 vorgesehen, welche am Betätigungshebel 26 der Verriegelungseinrichtung 14 wirksam wird. Diese Stelleinrichtung 27 ist dabei vorzugsweise an einem Anschlusselement an der Kupplungsstange 2 gelagert. Im einfachsten Fall ist die Knickgelenk-Verbindungseinrichtung 5 derart in die Kupplungsstange 2 integriert, dass der Kupplungsstangenteil, welcher mit dem Kupplungskopf gekoppelt ist, frei von der Lagerung der Verriegelungseinrichtung 14 ist und somit die Fernbetätigung am Kupplungskopf gelagert werden kann.

Die Figur 4 zeigt in schematisiert vereinfachter Darstellung die Möglichkeit der mechanischen Verbindung zwischen dem Kopplungselement 6 und dem Kupplungsteil 3. Dabei weist der in Einbaulage zum anderen Kupplungsstangenteil 4 gewandte Endbereich des Kupplungsstangenteils 3 ringförmig umlaufenden Flanschbereich, insbesondere Schalenmuffenbund auf. Ferner erkennbar ist das Kopplungselement 6 und dessen Ausgestaltung am Innenumfang sowie die Lagefixierung zwischen beiden über einen Stützring 30 und die Befestigung über einen kraftschlüssig mit dem Stützring verbindbaren und mit dem Kopplungselement verschraubbaren Schraubring 32. Die Sicherung in Axialrichtung erfolgt jeweils über einen Sicherungsstift 33. Um die Montage sicher zu gewährleisten wird dabei das Kopplungselement 6 über den Endbereich des Kupplungsteils 3 geschoben und mit Sicherungsstiften 33 gesichert. Der Stützring 30 wird eingelegt und der Schraubring 32, welcher der Verklemmung zwischen Stützring 30 und Kopplungselement 6 einerseits und Stützring 30 und Bauelement 3 andererseits dient, eingedreht.

In einer besonders vorteilhaften Ausgestaltung und zur sicheren Realisierung der Verbindung ist der Stützring 30 in Umfangsrichtung zweigeteilt und weist zwei unterschiedliche Durchmesserbereiche in Einbaulage auf, über die die unterschiedlichen Funktionen und Abstützfunktionen realisiert werden können.

Die Figuren 5a und 5b zeigen in schematisiert vereinfachter Darstellung den Einsatz einer Knickgelenk-Verbindungseinrichtung 5 in einer Kupplungsvorrichtung 1 in der Funktionsstellung "Gekoppelt" in Figur 5a und "Entkoppelt" in Figur 5b. Die Knickgelenk-Verbindungseinrichtung 5 ist zwischen zwei Kupplungsstangenteilen 3, 4 angeordnet. Der Kupplungsstangenteil 4 dient hier der Kopplung mit einem Anschlusselement in Form eines Kupplungskopfes 34. Der Kupplungsstangenteil 3 dient hier der Kopplung mit einer Anlenkung 35 am Fahrzeug.

### Bezugszeichenliste

- 1: Kupplungsvorrichtung
- 2: Kupplungsstange
- 3: erster Kupplungsstangenteil
- 4: zweiter Kupplungsstangenteil
- 5: Knickgelenkverbindung
- 6: ringförmiges Kopplungselement
- 7: ringförmiges Kopplungselement
- 8: Anschlusseinrichtung
- 9: Anschlusseinrichtung
- 10: Anschlusseinrichtung
- 11: Anschlusseinrichtung
- 12: Einrichtung zum gelenkigen Verbinden
- 13: Gelenkverbindung
- 14: Verriegelungseinrichtung
- 16: Verriegelungselement
- 17: Vorspanneinrichtung
- 17.1, 17.2: Federelemente
- 18: Stelleinrichtung
- 19: Fläche
- 20: Flansch
- 22: Flanschbereich
- 23: Flanschbereich
- 24.1, 24.2: Flanschbereich
- 25: Flanschbereich
- 26: Betätigungshebel
- 27: Stelleinrichtung
- 30: Stützring
- 32: Schraubring
- 33: Stift
- 34: Kupplungskopf
- 35: Anlenkung
- L: Längsachse
- L3, L4: Längsachse
- S13: Schwenkachse
- S16: Schwenkachse

## Patentansprüche

1. Schienenfahrzeugkupplungsvorrichtung (1)
mit einem Kupplungskopf (34),
mit einer sich entlang einer Längsachse erstreckenden Kupplungsstange (2) mit einem ersten Endbereich zum wenigstens mittelbarem Verbinden mit einem Fahrzeug und einem zweiten Endbereich zum wenigstens mittelbarem Verbinden mit dem Kupplungskopf (34) zum Koppeln mit einem Gegenkupplungskopf eines zweiten Fahrzeuges,
mit einer Knickgelenk-Verbindungseinrichtung (5) zum Kraft übertragenden Verbinden zweier sich in einer ersten Funktionsstellung "Gekoppelt" jeweils entlang einer gemeinsamen Längsachse (L) erstreckender Bauteile und zum Verschwenken eines der beiden Bauteile gegenüber dem anderen Bauteil um eine senkrecht und vorzugsweise beabstandet zur Längsachse (L) angeordnete Schwenkachse (S13) in wenigstens eine weitere zweite Funktionsstellung "Entkoppelt",
wobei die Knickgelenk-Verbindungseinrichtung (5) zwischen den Bauteilen Kupplungskopf (34) und Kupplungsstange (2) oder Kupplungsstange (2) und einer Anlenkung an das Fahrzeug oder Kupplungsstangenteilen (3, 4) der Kupplungsstange angeordnet ist, **dadurch gekennzeichnet,**
**dass** die Knickgelenk-Verbindungseinrichtung zwei Kopplungselemente (6, 7) umfasst, wobei jedes der Kopplungselemente (6, 7) einen Anschlussbereich mit einer Verbindungs- bzw. Anschlusseinrichtung (8, 9) zum lösbaren Verbinden mit einem Endbereich eines der Bauteile aufweist,
die beiden Kopplungselemente (6, 7) über wenigstens eine die Schwenkachse (S13) beschreibende Gelenkverbindung (13) miteinander verbunden sind und
den beiden Kopplungselementen (6, 7) wenigstens eine lösbare Einrichtung zum Kraft übertragenden Verbinden der Kopplungselemente (6, 7) zugeordnet ist, wobei der die Anschlusseinrichtung (8, 9) tragende Anschlussbereich eines einzelnen Kopplungselementes (6, 7) zum lösbaren Verbinden mit dem Endbereich eines der Bauteile Mittel zum Erzeugen zumindest eines Formschlusses oder Kraftschlusses oder einer Kombination aus diesen im Zusammenwirken mit im Endbereich des Bauteils angeordneten Anschlusseinrichtungen (10, 11) aufweist und der die Anschlusseinrichtung (8, 9) tragende Anschlussbereich eines einzelnen Kopplungselementes (6, 7) zum lösbaren Verbinden mit dem Endbereich eines der Bauteile als einteilige Schalenmuffe zum Verbinden mit einem im Endbereich des Bauteils angeordneten Schalenmuffenbund ausgebildet ist und die Einrichtung zum lösbaren Verbinden der Kopplungselemente (6, 7) miteinander in der ersten Funktionsstellung "Gekoppelt" als Verriegelungseinrichtung (14) mit einem Verriegelungselement (16) und einer dem Verriegelungselement (16) zugeordneten Stelleinrichtung (18) zur Betätigung des Verriegelungselementes (16) ausgebildet ist.

2. Schienenfahrzeugkupplungsvorrichtung (1) nach Anspruch 1,
**dadurch gekennzeichnet,**
**dass** die Anschlusseinrichtung (8, 9) eines einzelnen Kopplungselementes (6, 7) am Innenumfang Mittel zur wenigstens mittelbaren Abstützung in Längsrichtung des Bauteiles betrachtet an einem ersten Flächenbereich des Schalenmuffenbundes und einen Innengewinde tragenden Bereich zum Zusammenwirken mit einem Schraubring (32) zum wenigstens mittelbarem Verspannen des Koppelelementes (6, 7) mit dem im Endbereich des Bauteils angeordneten Schalenmuffenbund, insbesondere einem zweiten entgegengesetzt zum ersten Flächenbereich ausgerichteten Flächenbereich am Schalenmuffenbund aufweist.

3. Schienenfahrzeugkupplungsvorrichtung (1) nach einem der vorgenannten Ansprüche,
**dadurch gekennzeichnet,**
**dass** die Einrichtung zum lösbaren Verbinden der Kopplungselemente miteinander in der ersten Funktionsstellung "Gekoppelt" als Verbindungseinrichtung, ausgewählt aus der nachfolgenden Gruppe von Verbindungseinrichtungen ausgebildet ist:
- Formschlüssige Verbindungseinrichtung
- kraftschlüssige Verbindungseinrichtung,
insbesondere Klemmverbindungseinrichtung oder Verspanneinrichtung oder Schraubverbindungseinrichtung.

4. Schienenfahrzeugkupplungsvorrichtung (1) nach einem der vorgenannten Ansprüche,
**dadurch gekennzeichnet,**
**dass** das Verriegelungselement (16) vorgespannt an einem der Kopplungselemente (6, 7) gegenüber diesem verschwenkbar oder verschiebbar gelagert ist und die Stelleinrichtung (18) ein Betätigungselement aufweist, welches ausgebildet und angeordnet ist, nur beim Verriegeln oder Entriegeln aktiv betätigt oder zu diesem Zweck angesteuert zu werden.

5. Schienenfahrzeugkupplungsvorrichtung (1) nach einem der vorgenannten Ansprüche,
**dadurch gekennzeichnet,**
**dass** das Verriegelungselement (16) als gekrümmtes Hebelelement ausgebildet ist, welches mit einem ersten Endbereich um eine senkrecht und parallel zur Längsachse angeordnete Schwenkachse (16) an einem der Kopplungselemente (6, 7) schwenkbar gelagert ist und am anderen freien Endbereich zumindest einen Verriegelungsflächenbereich zum Zusammenwirken mit einem Flächenbereich am jeweils anderen der Kopplungselemente (6, 7) unter Ausbildung eines Kraft- und/oder Formschlusses aufweist.

6. Schienenfahrzeugkupplungsvorrichtung (1) nach einem der Vorgenannten Ansprüche,
**dadurch gekennzeichnet,**
**dass** das Verriegelungselement (16) am freien Endbereich eine Eingleit- oder Beaufschlagungsfläche zum Zusammenwirken mit dem anderen der Koppelelemente (7, 6) aufweist, um beim Verschwenken des anderen Koppelelementes aus der zweiten in die erste Funktionsstellung von diesem ausgelenkt zu werden und aufgrund der Rückstellkräfte einer zur vorgespannten Lagerung vorgesehenen Vorspanneinrichtung (17) selbsttätig in die Verriegelungsstellung verbracht wird.

7. Schienenfahrzeugkupplungsvorrichtung (1) nach einem der vorgenannten Ansprüche,
**dadurch gekennzeichnet,**
**dass** die lösbare Einrichtung zum Kraft übertragenden Verbinden der Kopplungselemente (6, 7) und die Gelenkverbindung (13) an einem der beiden Kopplungselemente (6, 7) und bezogen auf die Längsachse (L) der Knickgelenk-Verbindungseinrichtung (5) beidseitig an diesem angeordnet oder vorgesehen sind.

8. Schienenfahrzeugkupplungsvorrichtung (1) nach einem der vorgenannten Ansprüche,
**dadurch gekennzeichnet,**
**dass** das einzelne Kopplungselement (6, 7) als ringförmiges Bauteil ausgebildet ist, mit beidseitig der Längsachse (L) am Außenumfang angeordneten Flanschbereichen (22, 23, 24, 25).

9. Schienenfahrzeugkupplungsvorrichtung (1) nach einem der vorgenannten Ansprüche,
**dadurch gekennzeichnet,**
**dass** die lösbare Einrichtung zum Kraft übertragenden Verbinden der Kopplungselemente (6, 7) in Längsrichtung der Knickgelenk-Verbindungseinrichtung (5) betrachtet im Bereich der Erstreckung der an einem einzelnen Kopplungselement (6, 7) angeordneten Anschlusseinrichtung (8, 9) zum lösbaren Verbinden mit einem Endbereich eines der Bauteile oder innerhalb des Bereiches der Erstreckung beider Kopplungselemente (6, 7) in Längsrichtung angeordnet ist.

10. Schienenfahrzeugkupplungsvorrichtung (1) nach einem der vorgenannten Ansprüche,
**dadurch gekennzeichnet,**
**dass** die Gelenkverbindung (13) und die lösbare Einrichtung zum Kraft übertragenden Verbinden der Kopplungselemente (6, 7) in Längsrichtung der Knickgelenk-Verbindungseinrichtung (5) betrachtet frei von Versatz zueinander angeordnet sind.

11. Schienenfahrzeugkupplungsvorrichtung (1) nach einem der vorgenannten Ansprüche,
**dadurch gekennzeichnet,**
**dass** die Gelenkverbindung (13) in Längsrichtung der Knickgelenk-Verbindungseinrichtung (5) betrachtet im Bereich der Erstreckung der an einem einzelnen Kopplungselement (6, 7) angeordneten Anschlusseinrichtung (8, 9) zum lösbaren Verbinden mit einem Endbereich eines der Bauteile oder innerhalb des Bereiches der Erstreckung beider Kopplungselemente (6, 7) in Längsrichtung angeordnet ist.

## Claims

1. Rail vehicle coupling device (1) having a coupler head (34), having a coupling bar (2) which extends along a longitudinal axis and has a first end region for at least indirectly connecting to a vehicle, and a second end region for at least indirectly connecting to the coupler head (34) so as to couple to a mating coupler head of a second vehicle; having an articulated-joint connection installation (5) for connecting in a force-transmitting manner two components which in a first functional position "coupled" extend in each case along a common longitudinal axis (L) and for pivoting one of the two components relative to the other component about a pivot axis (S13) that is disposed so as to be perpendicular to and preferably spaced apart from the longitudinal axis (L) to at least one further second functional position "uncoupled"; wherein the articulated-joint connection installation (5) is disposed between the components coupler head (34) and coupling bar (2), or coupling bar (2) and an articulation of the coupling bar on the vehicle or coupling bar parts (3, 4),
**characterized in that**
the articulated-joint connection installation comprises two coupling elements (6, 7), wherein each of the coupling elements (6, 7) has a connector region having a connection or connector installation (8, 9) for releasably connecting to an end region of one of the components; the two coupling elements (6, 7) are connected to each other by way of at least one articulated connection (13) which defines the pivot axis (S13); and the two coupling elements (6, 7) are assigned at least one releasable installation for connecting in a force-transmitting manner the coupling elements (6, 7), wherein the connector region of an individual coupling element (6, 7) that supports the connector installation (8, 9) for releasably connecting to the end region of one of the components has means for generating at least a form-fit or force-fit or a combination thereof when interacting with connector installations (10, 11) disposed in the end region of the component, and the connector region of an individual coupling element (6, 7) that supports the connector installation (8, 9) for releasably connecting to the end region of one of the components is configured as an integral shell-type sleeve for connecting to a shell-type sleeve collar disposed in the end region of the component, and the installation for releasably connecting the coupling elements (6, 7) to each other in the first functional position "coupled" is configured as a locking installation (14) having a locking element (16) and an actuating installation (18), assigned to the locking element (16), for activating the locking element (16).

2. Rail vehicle coupling device (1) according to Claim 1,
**characterized in that,**
when viewed in the longitudinal direction of the component, the connector installation (8, 9) of an individual coupling element (6, 7) on the internal circumference has means for at least indirectly supporting on a first planar region of the shell-type sleeve collar and a region, supporting an internal thread, for interacting with a threaded ring (32) so as to at least indirectly brace the coupling element (6, 7) with the shell-type sleeve collar disposed in the end region of the component, in particular a second planar region on the shell-type sleeve collar that is aligned so as to be opposite the first planar region.

3. Rail vehicle coupling device (1) according to one of the preceding claims,
**characterized in that**
the installation for releasably connecting the coupling elements to each other in the first functional position "coupled" is configured as a connection installation selected from the following group of connection installations:
- form-fitting connection installation,
- force-fitting connection installation,
in particular clamp-connection installation or bracing installation or screw-connection installation.

4. Rail vehicle coupling device (1) according to one of the preceding claims,
**characterized in that**
the locking element (16) is mounted so as to be pre-tensioned on one of the coupling elements (6, 7) and so as to be pivotable or displaceable relative to the latter, and the actuating installation (18) has an activation element which is configured and disposed so as to be actively activated or to be actuated for this purpose only when locking or unlocking.

5. Rail vehicle coupling device (1) according to one of the preceding claims,
**characterized in that**
the locking element (16) is configured as a curved lifting element which by way of a first end region is mounted on one of the coupling elements (6, 7) so as to be pivotable about a pivot axis (16) that is disposed so as to be perpendicular and parallel to the longitudinal axis, and on the other free end region has at least one locking face region for interacting with a planar region on the respective other one of the coupling elements (6, 7) while configuring a force-fit and/or form-fit.

6. Rail vehicle coupling device (1) according to one of the preceding claims,
**characterized in that**
the locking element (16) on the free end region has an insertion or impingement face for interacting with the other one of the coupling elements (7, 6) so as, when pivoting the other coupling element, to be deflected by the latter from the second to the first functional position, and by virtue of the restoring forces of a pre-tensioning installation (17) provided for pre-tensioned mounting is moved in a self-acting manner to the locking position.

7. Rail vehicle coupling device (1) according to one of the preceding claims,
**characterized in that**
the releasable installation for connecting in a force-transmitting manner the coupling elements (6, 7) and the articulated connection (13) are disposed or provided on one of the two coupling elements (6, 7) and in terms of the longitudinal axis (L) of the articulated-joint connection installation (5) are disposed or provided on both sides thereon.

8. Rail vehicle coupling device (1) according to one of the preceding claims,
**characterized in that**
the individual coupling element (6, 7) is configured as an annular component having flange regions (22, 23, 24, 25) that are disposed on the external circumference on both sides of the longitudinal axis (L) .

9. Rail vehicle coupling device (1) according to one of the preceding claims,
**characterized in that**
the releasable installation for connecting in a force-transmitting manner the coupling elements (6, 7), when viewed in the longitudinal direction of the articulated-joint connection installation (5), is disposed in the region of the extent of the connector installation (8, 9), disposed on an individual coupling element (6, 7), for releasably connecting to an end region of one of the components, or within the region of the extent of both coupling elements (6, 7) in the longitudinal direction.

10. Rail vehicle coupling device (1) according to one of the preceding claims,
**characterized in that**
the articulated connection (13) and the releasable installation for connecting in a force-transmitting manner the coupling elements (6, 7), when viewed in the longitudinal direction of the articulated-joint connection installation (5), are disposed without a mutual offset.

11. Rail vehicle coupling device (1) according to one of the preceding claims,
**characterized in that**
the articulated connection (13), when viewed in the longitudinal direction of the articulated-joint connection installation (5), is disposed in the region of the extent of the connector installation (8, 9), disposed on an individual coupling element (6, 7), for releasably connecting to an end region of one of the components, or within the region of the extent of both coupling elements (6, 7) in the longitudinal direction.

## Revendications

1. Dispositif d'accouplement pour véhicule ferroviaire (1) :
avec une tête d'accouplement (34) ;
avec une barre d'accouplement (2) s'étendant le long d'un axe longitudinal avec une première zone d'extrémité servant pour la connexion au moins indirecte avec un véhicule et avec une deuxième zone d'extrémité servant pour la connexion au moins indirecte avec la tête d'accouplement (34) à accoupler à une contre-tête d'accouplement d'un deuxième véhicule,
avec un dispositif de liaison à articulation pliée (5) servant à connecter avec transmission de force deux composants s'étendant respectivement le long d'un axe longitudinal (L) commun dans une première position fonctionnelle « couplée » et à pivoter un des deux composants par rapport à l'autre composant autour d'un axe de pivotement (S13) disposé perpendiculairement et
de préférence à distance par rapport à l'axe longitudinal (L) dans au moins une deuxième position fonctionnelle supplémentaire « découplée » ;
le dispositif de liaison à articulation pliée (5) étant disposé entre les composants tête d'accouplement (34) et barre d'accouplement (2) ou barre d'accouplement (2) et un attelage au véhicule ou parties de barre d'accouplement (3, 4) de la barre d'accouplement ;
**caractérisé en ce que** :
le dispositif de liaison à articulation pliée comprend deux éléments de couplage (6, 7), chacun des éléments de couplage (6, 7) comportant une zone de raccordement avec un dispositif de connexion et/ou de raccordement (8, 9) servant pour la connexion amovible avec la zone d'extrémité d'un des composants ;
les deux éléments de couplage (6, 7) étant reliés entre eux via au moins une connexion articulée (13) décrivant l'axe de pivotement (S13) ; et
au moins un dispositif amovible de connexion par transmission de force des éléments de couplage (6, 7) étant associé aux deux éléments de couplage (6, 7), la zone de raccordement, supportant le dispositif de raccordement (8, 9), d'un élément de couplage (6, 7) individuel servant à la connexion amovible, avec la zone d'extrémité d'un des composants, comportant des moyens de réalisation d'au moins une complémentarité de formes ou une complémentarité de forces ou d'une combinaison de ces dispositifs de raccordement (10, 11) disposés en interaction dans la zone d'extrémité du composant et la zone de raccordement, supportant le dispositif de raccordement (8, 9), d'un élément de couplage (6, 7) individuel étant réalisé pour la connexion amovible avec la zone d'extrémité d'un des composants sous la forme d'un manchon à coquilles d'un seul tenant à connecter à une attache de manchon à coquilles disposée dans la zone d'extrémité du composant et le dispositif de connexion amovible des éléments de couplage (6, 7) étant réalisé entre eux dans la première position fonctionnelle « couplée » sous la forme d'un dispositif de verrouillage (14) avec un élément de verrouillage (16) et un dispositif de réglage (18) associé à l'élément de verrouillage (16) pour actionner l'élément de verrouillage (16).

2. Dispositif d'accouplement pour véhicule ferroviaire (1) selon la revendication 1,
**caractérisé en ce que** :
le dispositif de raccordement (8, 9) d'un élément de couplage (6, 7) individuel comporte au niveau de la périphérie intérieure des moyens de renfort au moins indirect dans la direction longitudinale du composant considéré au niveau d'une première zone superficielle de l'attache de manchon à coquilles et une zone supportant un filetage intérieur pour l'interaction avec une bague vissée (32) afin de serrer au moins indirectement l'élément de couplage (6, 7) avec l'attache de manchon à coquilles disposée dans la zone d'extrémité du composant, notamment avec une deuxième zone superficielle orientée de façon opposée par rapport à la première zone superficielle au niveau de l'attache de manchon à coquilles.

3. Dispositif d'accouplement pour véhicule ferroviaire (1) selon l'une quelconque des revendications précédentes,
**caractérisé en ce que** :
le dispositif de connexion amovible des éléments de couplage est sélectionné dans la première position fonctionnelle « couplée » sous la forme d'un dispositif de connexion, parmi le groupe de dispositifs de connexion suivants :
- dispositif de connexion réalisé par complémentarité de formes ;
- dispositif de connexion réalisé par complémentarité de forces ;
notamment dispositif de connexion par coincement ou dispositif de connexion par serrage ou vissage.

4. Dispositif d'accouplement pour véhicule ferroviaire (1) selon l'une quelconque des revendications précédentes,
**caractérisé en ce que** :
l'élément de verrouillage (16) est disposé de façon à pouvoir pivoter ou coulisser de façon précontrainte au niveau d'un des éléments de couplage (6, 7) par rapport à celui-ci et le dispositif de réglage (18) comporte un élément d'actionnement réalisé et disposé pour n'être actionné activement qu'en cas de verrouillage ou de déverrouillage ou pour être commandé à cette fin.

5. Dispositif d'accouplement pour véhicule ferroviaire (1) selon l'une quelconque des revendications précédentes,
**caractérisé en ce que** :
l'élément de verrouillage (16) est réalisé sous la forme d'un élément de levier coudé qui est disposé de façon à pouvoir pivoter avec une première zone d'extrémité autour d'un axe de pivotement (16) disposé perpendiculairement et parallèlement à l'axe longitudinal au niveau d'un des éléments de couplage (6, 7) et comportant au niveau de l'autre zone d'extrémité libre au moins une zone superficielle de verrouillage pour l'interaction avec une zone superficielle au niveau respectivement de l'autre élément parmi les éléments de couplage (6, 7) par formation d'une complémentarité de forces et/ou de formes.

6. Dispositif d'accouplement pour véhicule ferroviaire (1) selon l'une quelconque des revendications précédentes,
**caractérisé en ce que** :
l'élément de verrouillage (16) comporte au niveau de la zone d'extrémité libre une surface de glissement ou de charge servant à l'interaction avec l'autre élément parmi les éléments de couplage (7, 6), pour être dévié depuis là en cas de pivotement de l'autre élément de couplage depuis la deuxième jusque dans la première position fonctionnelle et être amené automatiquement dans la position de verrouillage sur la base des forces de rappel d'un dispositif de précontrainte (17) prévu pour le positionnement précontraint.

7. Dispositif d'accouplement pour véhicule ferroviaire (1) selon l'une quelconque des revendications précédentes,
**caractérisé en ce que** :
le dispositif de connexion par transmission de force des éléments de couplage amovible (6, 7) et la connexion articulée (13) sont disposés ou sont prévus au niveau d'un des deux éléments de couplage (6, 7) et des deux côtés au niveau de celui-ci par rapport à l'axe longitudinal (L) du dispositif de liaison à articulation pliée (5).

8. Dispositif d'accouplement pour véhicule ferroviaire (1) selon l'une quelconque des revendications précédentes,
**caractérisé en ce que** :
l'élément de couplage (6, 7) individuel est réalisé sous la forme d'un composant annulaire, avec des zones de flasque (22, 23, 24, 25) disposées des deux côtés de l'axe longitudinal (L) au niveau de la périphérie extérieure.

9. Dispositif d'accouplement pour véhicule ferroviaire (1) selon l'une quelconque des revendications précédentes,
**caractérisé en ce que** :
le dispositif de connexion par transmission de force amovible des éléments de couplage (6, 7) est disposé dans la direction longitudinale du dispositif de liaison à articulation pliée (5) considéré dans la zone de l'extension du dispositif de raccordement (8, 9) placé dans la direction longitudinale au niveau d'un élément de couplage (6, 7) individuel afin de réaliser la connexion amovible avec une zone d'extrémité d'un des composants ou à l'intérieur de la zone d'extension des deux éléments de couplage (6, 7).

10. Dispositif d'accouplement pour véhicule ferroviaire (1) selon l'une quelconque des revendications précédentes,
**caractérisé en ce que** :
la connexion articulée (13) et le dispositif de connexion par transmission de force amovible des éléments de couplage (6, 7) sont disposés sans jeu dans la direction longitudinale du dispositif de liaison à articulation pliée (5).

11. Dispositif d'accouplement pour véhicule ferroviaire (1) selon l'une quelconque des revendications précédentes,
**caractérisé en ce que** :
la connexion articulée (13) est disposée dans la direction longitudinale du dispositif de liaison à articulation pliée (5) considéré dans la zone de l'extension du dispositif de raccordement (8, 9) disposé dans la direction longitudinale au niveau d'un élément de couplage (6, 7) individuel pour réaliser la connexion amovible avec une zone d'extrémité d'un des composants ou à l'intérieur de la zone d'extension des deux éléments de couplage (6, 7).
